# EUROPEAN PATENT SPECIFICATION

(11) **EP 2 433 468 B1**
(45) Date of publication and mention of the grant of the patent: **24.07.2013**
(21) Application number: 10729960.4
(22) Date of filing: 18.05.2010
(51) Int. Cl.: H04W 76/04

(54) **TRANSITIONING A USER EQUIPMENT (UE) TO A DEDICATED CHANNEL STATE DURING SETUP OF A COMMUNICATION SESSION WITHIN A WIRELESS COMMUNICATIONS SYSTEM**
ÜBERGANG EINES BENUTZERGERÄTS ZU EINEM DEDIZIERTEN KANALSTATUS WÄHREND DER EINRICHTUNG EINER KOMMUNIKATIONSSITZUNG IN EINEM DRAHTLOSEN KOMMUNIKATIONSSYSTEM
PASSAGE D'UN ÉQUIPEMENT D'UTILISATEUR (UE) VERS UN ÉTAT DE CANAL DÉDIÉ AU COURS DE L'ÉTABLISSEMENT D'UNE SESSION DE COMMUNICATION À L'INTÉRIEUR D'UN SYSTÈME DE COMMUNICATIONS SANS FIL

(30) Priority: 22.05.2009 US 180624 P; 17.05.2010 US 781666
(43) Date of publication of application: 28.03.2012
(73) Proprietor: QUALCOMM Incorporated, San Diego, California 92121-1714 (US)
(72) Inventor: LIN, Yih-Hao, San Diego California 92121-1714 (US); SONG, Bongyong, San Diego California 92121-1714 (US)
(74) Representative: Reedy, Orlaith
(86) International application number: PCT/US2010/035234
(87) International publication number: WO 2010/135312

(56) References cited:
- US-A1- 2004 180 675
- US-A1- 2005 141 471
- US-A1- 2006 271 636
- US-A1- 2007 206 595
- US-A1- 2008 182 594

## Description

### BACKGROUND OF THE INVENTION

### 1. Field of the Invention

Embodiments of the invention relate to transitioning user equipment (UE) to a dedicated channel state during setup of a communication session during a wireless communications system.

### 2. Description of the Related Art

Wireless communication systems have developed through various generations, including a first-generation analog wireless phone service (1G), a second-generation (2G) digital wireless phone service (including interim 2.5G and 2.75G networks) and a third-generation (3G) high speed data / Internet-capable wireless service. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Time Division Multiple Access (TDMA), the Global System for Mobile access (GSM) variation of TDMA, and newer hybrid digital communication systems using both TDMA and CDMA technologies.

The method for providing CDMA mobile communications was standardized in the United States by the Telecommunications Industry Association/Electronic Industries Association in TIA/EIA/IS-95-A entitled "Mobile Station-Base Station Compatibility Standard for Dual-Mode Wideband Spread Spectrum Cellular System," referred to herein as IS-95. Combined AMPS & CDMA systems are described in TIA/EIA Standard IS-98. Other communications systems are described in the IMT-2000/UM, or International Mobile Telecommunications System 2000/Universal Mobile Telecommunications System, standards covering what are referred to as wideband CDMA (W-CDMA), CDMA2000 (such as CDMA2000 1xEV-DO standards, for example) or TD-SCDMA.

In W-CDMA wireless communication systems, user equipments (UEs) receive signals from fixed position Node Bs (also referred to as cell sites or cells) that support communication links or service within particular geographic regions adjacent to or surrounding the base stations. Node Bs provide entry points to an access network (AN) / radio access network (RAN), which is generally a packet data network using standard Internet Engineering Task Force (IETF) based protocols that support methods for differentiating traffic based on Quality of Service (QoS) requirements. Therefore, the Node Bs generally interact with UEs through an over the air interface and with the RAN through Internet Protocol (IP) network data packets.

In wireless telecommunication systems, Push-to-talk (PTT) capabilities are becoming popular with service sectors and consumers. PTT can support a "dispatch" voice service that operates over standard commercial wireless infrastructures, such as W-CDMA, CDMA, FDMA, TDMA, GSM, etc. In a dispatch model, communication between endpoints (e.g., UEs) occurs within virtual groups, wherein the voice of one "talker" is transmitted to one or more "listeners." A single instance of this type of communication is commonly referred to as a dispatch call, or simply a PTT call. A PTT call is an instantiation of a group, which defines the characteristics of a call. A group in essence is defined by a member list and associated information, such as group name or group identification.

US Patent Publication No. US 2005/141471 discloses a method and system for controlling an access bearer in a real-time data service.

### SUMMARY

The invention concerns a method of operating an access network according to claim 1, a method of operating a user equipment according to claim 8, an access network according to claim 13, a user equipment according to claim 14, a non-transitory computer-readable storage medium according to claim 15, and a non-transitory computer-readable medium according to claim 16.

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:

FIG. 1 is a diagram of a wireless network architecture that supports access terminals and access networks in accordance with at least one embodiment of the invention.

FIG. 2A illustrates the core network of FIG. 1 according to an embodiment of the present invention.

FIG. 2B illustrates an example of the wireless communications system 100 of FIG. 1 in more detail.

FIG. 3 is an illustration of an access terminal in accordance with at least one embodiment of the invention.

FIG. 4 illustrates a conventional packet data protocol (PDP) context activation and resource allocation for a General Packet Radio Services (GPRS) communication session.

FIG. 5 illustrates PDP context activation and resource allocated for a GPRS communication service and/or application according to an embodiment.

FIG. 6A illustrates a process of setting up a server-arbitrated communication session in accordance with an embodiment of the invention.

FIG. 6B illustrates a conventional process by which the RAN 120 can determine whether to transition a particular UE from CELL_FACH state to CELL_DCH state.

FIG. 7 illustrates a conventional process of setting up a server-arbitrated communication session in which the process of FIG. 6B determines not to transition the UE from CELL_FACH to CELL_DCH state.

FIG. 8 illustrates a process of setting up a server-arbitrated communication session in accordance with FIG. 6A where a CELL_DCH state transition is triggered based on an association that a UE subscribes to a delay sensitive service and/or application in an embodiment of the invention.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A High Data Rate (HDR) subscriber station, referred to herein as user equipment (UE), may be mobile or stationary, and may communicate with one or more access points (APs), which may be referred to as Node Bs. A UE transmits and receives data packets through one or more of the Node Bs to a Radio Network Controller (RNC). The Node Bs and RNC are parts of a network called a radio access network (RAN). A radio access network can transport voice and data packets between multiple access terminals.

The radio access network may be further connected to additional networks outside the radio access network, such core network including specific carrier related servers and devices and connectivity to other networks such as a corporate intranet, the Internet, public switched telephone network (PSTN), a Serving General Packet Radio Services (GPRS) Support Node (SGSN), a Gateway GPRS Support Node (GGSN), and may transport voice and data packets between each UE and such networks. A UE that has established an active traffic channel connection with one or more Node Bs may be referred to as an active UE, and can be referred to as being in a traffic state. A UE that is in the process of establishing an active traffic channel (TCH) connection with one or more Node Bs can be referred to as being in a connection setup state. A UE may be any data device that communicates through a wireless channel or through a wired channel. A UE may further be any of a number of types of devices including but not limited to PC card, compact flash device, external or internal modem, or wireless or wireline phone. The communication link through which the UE sends signals to the Node B(s) is called an uplink channel (e.g., a reverse traffic channel, a control channel, an access channel, etc.). The communication link through which Node B(s) send signals to a UE is called a downlink channel (e.g., a paging channel, a control channel, a broadcast channel, a forward traffic channel, etc.). As used herein the term traffic channel (TCH) can refer to either an uplink / reverse or downlink/forward traffic channel.

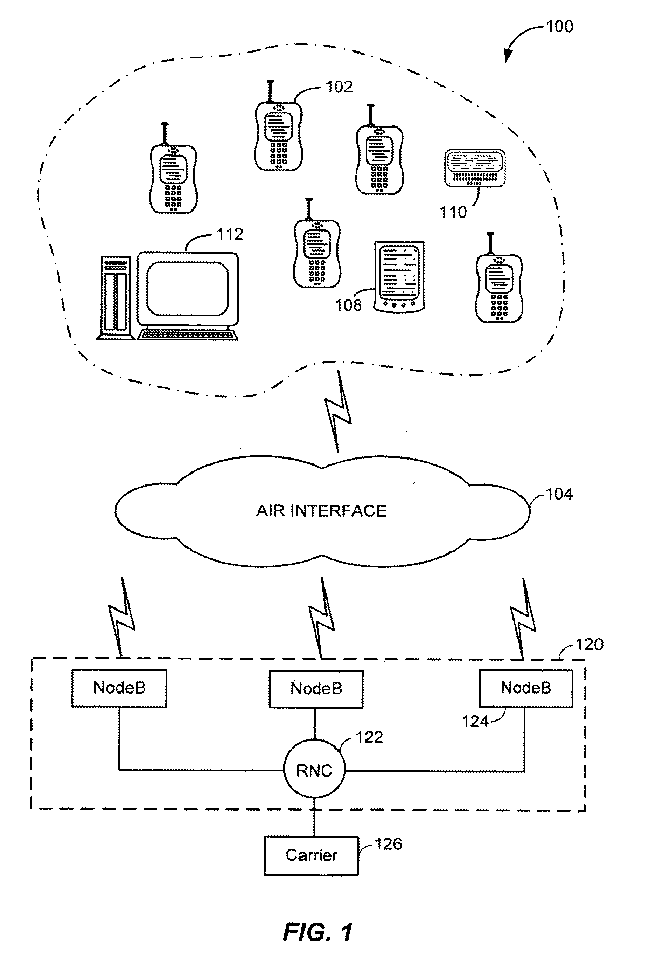

FIG. 1 illustrates a block diagram of one exemplary embodiment of a wireless communications system 100 in accordance with at least one embodiment of the invention. System 100 can contain UEs, such as cellular telephone 102, in communication across an air interface 104 with an access network or radio access network (RAN) 120 that can connect the access terminal 102 to network equipment providing data connectivity between a packet switched data network (e.g., an intranet, the Internet, and/or core network 126) and the UEs 102, 108, 110, 112. As shown here, the UE can be a cellular telephone 102, a personal digital assistant 108, a pager 110, which is shown here as a two-way text pager, or even a separate computer platform 112 that has a wireless communication portal. Embodiments of the invention can thus be realized on any form of access terminal including a wireless communication portal or having wireless communication capabilities, including without limitation, wireless modems, PCMCIA cards, personal computers, telephones, or any combination or subcombination thereof. Further, as used herein, the term "UE" in other communication protocols (i.e., other than W-CDMA) may be referred to interchangeably as an "access terminal", "AT", "wireless device", "client device", "mobile terminal", "mobile station" and variations thereof.

Referring back to FIG. 1, the components of the wireless communications system 100 and interrelation of the elements of the exemplary embodiments of the invention are not limited to the configuration illustrated. System 100 is merely exemplary and can include any system that allows remote UEs, such as wireless client computing devices 102, 108, 110, 112 to communicate over-the-air between and among each other and/or between and among components connected via the air interface 104 and RAN 120, including, without limitation, core network 126, the Internet, PSTN, SGSN, GGSN and/or other remote servers.

The RAN 120 controls messages (typically sent as data packets) sent to a RNC 122. The RNC 122 is responsible for signaling, establishing, and tearing down bearer channels (i.e., data channels) between a Serving General Packet Radio Services (GPRS) Support Node (SGSN) and the UEs 102/108/110/112. If link layer encryption is enabled, the RNC 122 also encrypts the content before forwarding it over the air interface 104. The function of the RNC 122 is well-known in the art and will not be discussed further for the sake of brevity. The core network 126 may communicate with the RNC 122 by a network, the Internet and/or a public switched telephone network (PSTN). Alternatively, the RNC 122 may connect directly to the Internet or external network. Typically, the network or Internet connection between the core network 126 and the RNC 122 transfers data, and the PSTN transfers voice information. The RNC 122 can be connected to multiple Node Bs 124. In a similar manner to the core network 126, the RNC 122 is typically connected to the Node Bs 124 by a network, the Internet and/or PSTN for data transfer and/or voice information. The Node Bs 124 can broadcast data messages wirelessly to the UEs, such as cellular telephone 102. The Node Bs 124, RNC 122 and other components may form the RAN 120, as is known in the art. However, alternate configurations may also be used and the invention is not limited to the configuration illustrated. For example, in another embodiment the functionality of the RNC 122 and one or more of the Node Bs 124 may be collapsed into a single "hybrid" module having the functionality of both the RNC 122 and the Node B(s) 124.

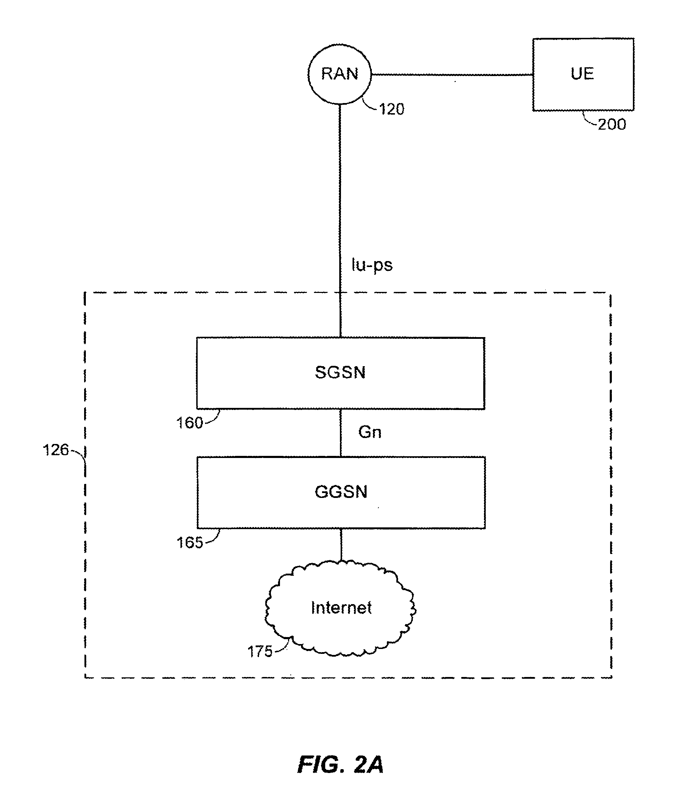

FIG. 2A illustrates the core network 126 according to an embodiment of the present invention. In particular, FIG. 2A illustrates components of a General Packet Radio Services (GPRS) core network implemented within a W-CDMA system. In the embodiment of FIG. 2A, the core network 126 includes a Serving GPRS Support Node (SGSN) 160, a Gateway GPRS Support Node (GGSN) 165 and an Internet 175. However, it is appreciated that portions of the Internet 175 and/or other components may be located outside the core network in alternative embodiments.

Generally, GPRS is a protocol used by Global System for Mobile communications (GSM) phones for transmitting Internet Protocol (IP) packets. The GPRS Core Network (e.g., the GGSN 165 and one or more SGSNs 160) is the centralized part of the GPRS system and also provides support for W-CDMA based 3G networks. The GPRS core network is an integrated part of the GSM core network, provides mobility management, session management and transport for IP packet services in GSM and W-CDMA networks.

The GPRS Tunneling Protocol (GTP) is the defining IP protocol of the GPRS core network. The GTP is the protocol which allows end users (e.g., access terminals) of a GSM or W-CDMA network to move from place to place while continuing to connect to the internet as if from one location at the GGSN 165. This is achieved transferring the subscriber's data from the subscriber's current SGSN 160 to the GGSN 165, which is handling the subscriber's session.

Three forms of GTP are used by the GPRS core network; namely, (i) GTP-U, (ii) GTP-C and (iii) GTP' (GTP Prime). GTP-U is used for transfer of user data in separated tunnels for each packet data protocol (PDP) context. GTP-C is used for control signaling (e.g., setup and deletion of PDP contexts, verification of GSN reachability, updates or modifications such as when a subscriber moves from one SGSN to another, etc.). GTP' is used for transfer of charging data from GSNs to a charging function.

Referring to FIG. 2A, the GGSN 165 acts as an interface between the GPRS backbone network (not shown) and the external packet data network 175. The GGSN 165 extracts the packet data with associated packet data protocol (PDP) format (e.g., IP or PPP) from the GPRS packets coming from the SGSN 160, and sends the packets out on a corresponding packet data network. In the other direction, the incoming data packets are directed by the GGSN 165 to the SGSN 160 which manages and controls the Radio Access Bearer (RAB) of the destination UE served by the RAN 120. Thereby, the GGSN 165 stores the current SGSN address of the target UE and his/her profile in its location register (e.g., within a PDP context). The GGSN is responsible for IP address assignment and is the default router for the connected UE. The GGSN also performs authentication and charging functions.

The SGSN 160 is representative of one of many SGSNs within the core network 126, in an example. Each SGSN is responsible for the delivery of data packets from and to the UEs within an associated geographical service area. The tasks of the SGSN 160 includes packet routing and transfer, mobility management (e.g., attach/detach and location management), logical link management, and authentication and charging functions. The location register of the SGSN stores location information (e.g., current cell, current VLR) and user profiles (e.g., IMSI, PDP address(es) used in the packet data network) of all GPRS users registered with the SGSN 160, for example, within one or more PDP contexts for each user or UE. Thus, SGSNs are responsible for (i) de-tunneling downlink GTP packets from the GGSN 165, (ii) uplink tunnel IP packets toward the GGSN 165, (iii) carrying out mobility management as UEs move between SGSN service areas and (iv) billing mobile subscribers. As will be appreciated by one of ordinary skill in the art, aside from (i) - (iv), SGSNs configured for GSM/EDGE networks have slightly different functionality as compared to SGSNs configured for W-CDMA networks.

The RAN 120 (e.g., or UTRAN, in Universal Mobile Telecommunications System (UMTS) system architecture) communicates with the SGSN 160 via a Iu interface, with a transmission protocol such as Frame Relay or IP. The SGSN 160 communicates with the GGSN 165 via a Gn interface, which is an IP-based interface between SGSN 160 and other SGSNs (not shown) and internal GGSNs, and uses the GTP protocol defined above (e.g., GTP-U, GTP-C, GTP', etc.). While not shown in FIG. 2A, the Gn interface is also used by the Domain Name System (DNS). The GGSN 165 is connected to a Public Data Network (PDN) (not shown), and in turn to the Internet 175, via a Gi interface with IP protocols either directly or through a Wireless Application Protocol (WAP) gateway.

The PDP context is a data structure present on both the SGSN 160 and the GGSN 165 which contains a particular UE's communication session information when the UE has an active GPRS session. When a UE wishes to initiate a GPRS communication session, the UE must first attach to the SGSN 160 and then activate a PDP context with the GGSN 165. This allocates a PDP context data structure in the SGSN 160 that the subscriber is currently visiting and the GGSN 165 serving the UE's access point.

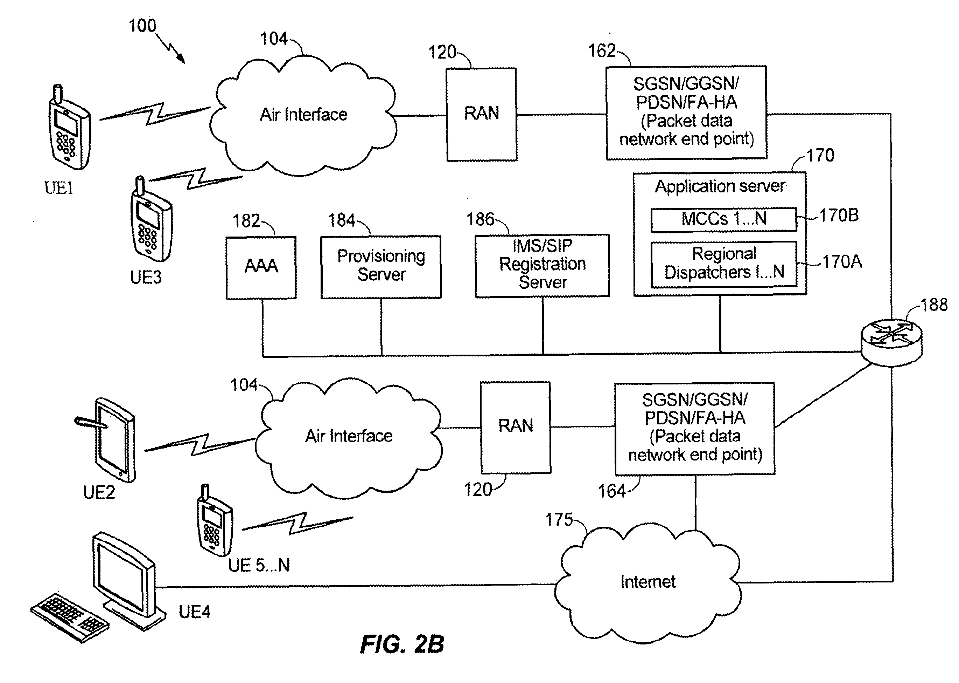

FIG. 2B illustrates an example of the wireless communications system 100 of FIG. 1 in more detail. In particular, referring to FIG. 2B, UEs 1...N are shown as connecting to the RAN 120 at locations serviced by different packet data network endpoints. The illustration of FIG. 2B is specific to W-CDMA systems and terminology, although it will be appreciated how FIG. 2B could be modified to confirm with a 1x EV-DO system. Accordingly, UEs 1 and 3 connect to the RAN 120 at a portion served by a first packet data network end-point 162 (e.g., which may correspond to SGSN, GGSN, PDSN, a home agent (HA), a foreign agent (FA), etc.). The first packet data network end-point 162 in turn connects, via the routing unit 188, to the Internet 175 and/or to one or more of an authentication, authorization and accounting (AAA) server 182, a provisioning server 184, an Internet Protocol (IP) Multimedia Subsystem (IMS) / Session Initiation Protocol (SIP) Registration Server 186 and/or the application server 170. UEs 2 and 5...N connect to the RAN 120 at a portion served by a second packet data network end-point 164 (e.g., which may correspond to SGSN, GGSN, PDSN, FA, HA, etc.). Similar to the first packet data network end-point 162, the second packet data network end-point 164 in turn connects, via the routing unit 188, to the Internet 175 and/or to one or more of the AAA server 182, a provisioning server 184, an IMS / SIP Registration Server 186 and/or the application server 170. UE 4 connects directly to the Internet 175, and through the Internet 175 can then connect to any of the system components described above.

Referring to FIG. 2B, UEs 1, 3 and 5...N are illustrated as wireless cell-phones, UE 2 is illustrated as a wireless tablet-PC and UE 4 is illustrated as a wired desktop station. However, in other embodiments, it will be appreciated that the wireless communication system 100 can connect to any type of UE, and the examples illustrated in FIG. 2B are not intended to limit the types of UEs that may be implemented within the system. Also, while the AAA 182, the provisioning server 184, the IMS/SIP registration server 186 and the application server 170 are each illustrated as structurally separate servers, one or more of these servers may be consolidated in at least one embodiment of the invention.

Further, referring to FIG. 2B, the application server 170 is illustrated as including a plurality of media control complexes (MCCs) 1...N 170B, and a plurality of regional dispatchers 1...N 170A. Collectively, the regional dispatchers 170A and MCCs 170B are included within the application server 170, which in at least one embodiment can correspond to a distributed network of servers that collectively functions to arbitrate communication sessions (e.g., half-duplex group communication sessions via IP unicasting and/or IP multicasting protocols) within the wireless communication system 100. For example, because the communication sessions arbitrated by the application server 170 can theoretically take place between UEs located anywhere within the system 100, multiple regional dispatchers 170A and MCCs are distributed to reduce latency for the arbitrated communication sessions (e.g., so that a MCC in North America is not relaying media back-and-forth between session participants located in China). Thus, when reference is made to the application server 170, it will be appreciated that the associated functionality can be enforced by one or more of the regional dispatchers 170A and/or one or more of the MCCs 170B. The regional dispatchers 170A are generally responsible for any functionality related to establishing a communication session (e.g., handling signaling messages between the UEs, scheduling and/or sending announce messages, etc.), whereas the MCCs 170B are responsible for hosting the communication session for the duration of the call instance, including conducting an in-call signaling and an actual exchange of media during an arbitrated communication session.

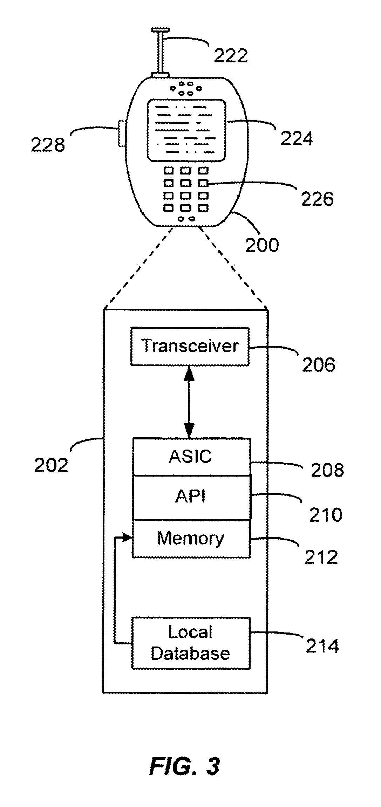

Referring to FIG. 3, a UE 200, (here a wireless device), such as a cellular telephone, has a platform 202 that can receive and execute software applications, data and/or commands transmitted from the RAN 120 that may ultimately come from the core network 126, the Internet and/or other remote servers and networks. The platform 202 can include a transceiver 206 operably coupled to an application specific integrated circuit ("ASIC" 208), or other processor, microprocessor, logic circuit, or other data processing device. The ASIC 208 or other processor executes the application programming interface ("API') 210 layer that interfaces with any resident programs in the memory 212 of the wireless device. The memory 212 can be comprised of read-only or random-access memory (RAM and ROM), EEPROM, flash cards, or any memory common to computer platforms. The platform 202 also can include a local database 214 that can hold applications not actively used in memory 212. The local database 214 is typically a flash memory cell, but can be any secondary storage device as known in the art, such as magnetic media, EEPROM, optical media, tape, soft or hard disk, or the like. The internal platform 202 components can also be operably coupled to external devices such as antenna 222, display 224, push-to-talk button 228 and keypad 226 among other components, as is known in the art.

Accordingly, an embodiment of the invention can include a UE including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, API 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UE 200 in FIG. 3 are to be considered merely illustrative and the invention is not limited to the illustrated features or arrangement.

The wireless communication between the UE 102 or 200 and the RAN 120 can be based on different technologies, such as code division multiple access (CDMA), W-CDMA, time division multiple access (TDMA), frequency division multiple access (FDMA), Orthogonal Frequency Division Multiplexing (OFDM), the Global System for Mobile Communications (GSM), or other protocols that may be used in a wireless communications network or a data communications network. For example, in W-CDMA, the data communication is typically between the client device 102, Node B(s) 124, and the RNC 122. The RNC 122 can be connected to multiple data networks such as the core network 126, PSTN, the Internet, a virtual private network, a SGSN, a GGSN and the like, thus allowing the UE 102 or 200 access to a broader communication network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

Below, embodiments of the invention are generally described in accordance with W-CDMA protocols and associated terminology (e.g., such as UE instead of mobile station (MS), mobile unit (MU), access terminal (AT), etc., RNC, contrasted with BSC in EV-DO, or Node B, contrasted with BS or MPT/BS in EV-DO, etc.). However, it will be readily appreciated by one of ordinary skill in the art how the embodiments of the invention can be applied in conjunction with wireless communication protocols other than W-CDMA.

In a conventional server-arbitrated communication session (e.g., via half-duplex protocols, full-duplex protocols, VoIP, a group session over IP unicast, a group session over IP multicast, a push-to-talk (PTT) session, a push-to-transfer (PTX) session, etc.), a session or call originator sends a request to initiate a communication session to the application server 170, which then forwards a call announcement message to the RAN 120 for transmission to one or more targets of the call.

User Equipments (UEs), in a Universal Mobile Telecommunications Service (UMTS) Terrestrial Radio Access Network (UTRAN) (e.g., the RAN 120) may be in either an idle mode or a radio resource control (RRC) connected mode.

Based on UE mobility and activity while in a RRC connected mode, the RAN 120 may direct UEs to transition between a number of RRC sub-states; namely, CELL_PCH, URA_PCH, CELL_FACH, and CELL_DCH states, which may be characterized as follows:
- In the CELL_DCH state, a dedicated physical channel is allocated to the UE in uplink and downlink, the UE is known on a cell level according to its current active set, and the UE has been assigned dedicated transport channels, downlink and uplink (TDD) shared transport channels, and a combination of these transport channels can be used by the UE.
- In the CELL_FACH state, no dedicated physical channel is allocated to the UE, the UE continuously monitors a forward access channel (FACH), the UE is assigned a default common or shared transport channel in the uplink (e.g., a random access channel (RACH), which is a contention-based channel with a power ramp-up procedure to acquire the channel and to adjust transmit power) that the UE can transmit upon according to the access procedure for that transport channel, the position of the UE is known by RAN 120 on a cell level according to the cell where the UE last made a previous cell update, and, in TDD mode, one or several USCH or DSCH transport channels may have been established.
- In the CELL_PCH state, no dedicated physical channel is allocated to the UE, the UE selects a PCH with the algorithm, and uses DRX for monitoring the selected PCH via an associated PICH, no uplink activity is possible and the position of the UE is known by the RAN 120 on cell level according to the cell where the UE last made a cell update in CELL_FACH state.
- In the URA_PCH state, no dedicated channel is allocated to the UE, the UE selects a PCH with the algorithm, and uses DRX for monitoring the selected PCH via an associated PICH, no uplink activity is possible, and the location of the UE is known to the RAN 120 at a Registration area level according to the UTRAN registration area (URA) assigned to the UE during the last URA update in CELL_FACH state.

Accordingly, URA_PCH State (or CELL_PCH State) corresponds to a dormant state where the UE periodically wakes up to check a paging indicator channel (PICH) and, if needed, the associated downlink paging channel (PCH), and it may enter CELL_FACH state to send a Cell Update message for the following event: cell reselection, periodical cell update, uplink data transmission, paging response, re-entered service area. In CELL_FACH State, the UE may send messages on the random access channel (RACH), and may monitor a forward access channel (FACH). The FACH carries downlink communication from the RAN 120, and is mapped to a secondary common control physical channel (S-CCPCH). From CELL_FACH State, the UE may enter CELL_DCH state after a traffic channel (TCH) has been obtained based on messaging in CELL_FACH state. A table showing conventional dedicated traffic channel (DTCH) to transport channel mappings in radio resource control (RRC) connected mode, is in Table 1 as follows:

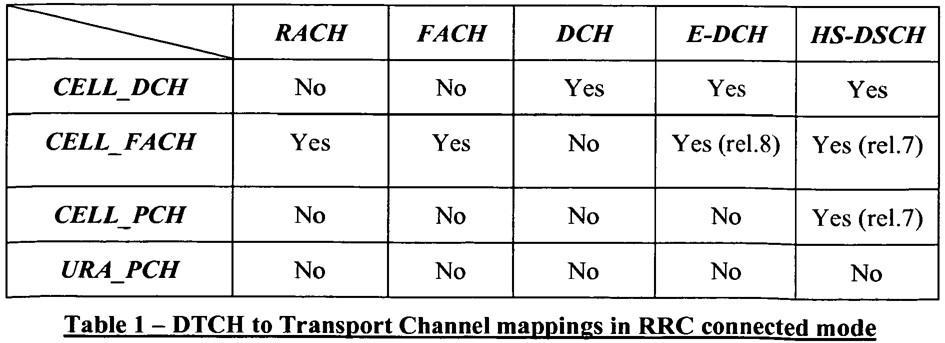

wherein the notations (rel. 8) and (rel. 7) indicate the associated 3GPP release where the indicated channel was introduced for monitoring or access.

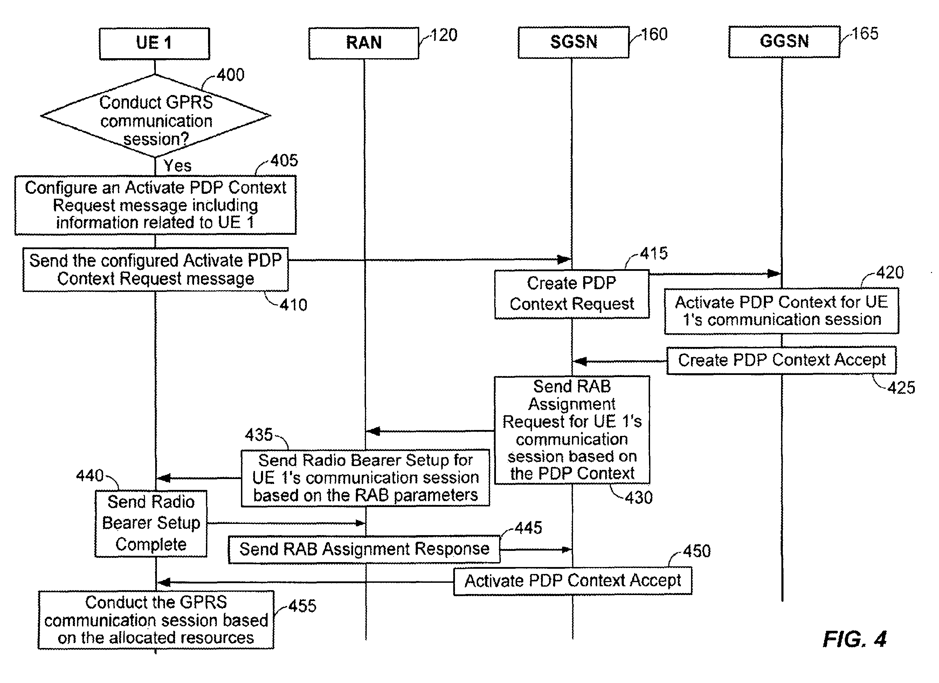

FIG. 4 illustrates a conventional process for setting up a given GPRS communication session. In particular, FIG. 4 illustrates a conventional manner of activating a PDP context for the given GPRS communication session, as well as allocating resources to an UE for supporting the given GPRS communication session based on the activated PDP context.

Referring to FIG. 4, UE 1 determines whether to conduct a GPRS communication session, 400. For example, the determination of 400 may correspond to the startup of a push-to-talk (PTT) application on UE 1 if the GPRS communication session corresponds to a group PTT call (e.g., a multicast call, etc.). If UE 1 determines to conduct a GPRS communication session, UE 1 is required to activate a PDP context for the session. Thus, UE 1 configures an Activate PDP Context Request message that includes information related to UE 1 for the GPRS communication session, 405. For example, the Activate PDP Context Request message may be configured to include the Requested QoS for the session, an access point name (APN) of the GGSN 165 (e.g., which may be obtained after a DNS query), etc. If the PDP Address, to which packets are addressed during the GPRS communication session, is dynamically assigned by the GGSN 165, in the Activate PDP Context Request message, the PDP Address field is empty because the PDP context for UE 1's session has not yet been activated.

After configuring the Activate PDP Context Request message in 405, UE 1 sends the configured Activate PDP Request message to the SGSN 160 via the RAN 120, 410. The SGSN 160 receives the Activate PDP Context Request message and sends a Create PDP Context Request message to the GGSN 165, 415. The GGSN 165 receives the Create PDP Context Request message from the SGSN 160, and activates a PDP context for UE 1's communication session, 420. Both SGSN and GGSN may retrieve the subscribed QoS profile from HLR and modify the requested QoS for the PDP context. The activation of the PDP context in 420 includes assigning a PDP address for UE 1's communication session (e.g., an IPv6 address). The GGSN 165 sends a Create PDP Context Accept message back to the SGSN 160, 425, which indicates that the Create PDP Context Request message from 415 is accepted and also conveys the PDP address for UE 1's communication session. The SGSN 160 sends a RAB assignment request for UE 1's communication session based on the PDP context to the RAN 120, 430. For example, the SGSN 160 may instruct the RAN 120 with regard to a given level of QoS resources for allocating to UE 1 during the communication session using the RAB Parameter field in the RAB Assignment Request, which contains the QoS requirements on UE 1's communication link. The RAN 120 receives the RAB assignment request and sends a Radio Bearer Setup message for UE 1's communication session based on the RAB parameters, 435. UE 1 receives the Radio Bearer Setup message, configures the Radio Bearer accordingly, and sends a Radio Bearer Setup Complete message to the RAN 120, 440. The RAN 120 then sends a RAB Assignment Response message back to the SGSN 160, 445. At this point, the SGSN 160 sends an Activate PDP Context Accept message to UE 1 via the RAN 120, 450, which indicates that the Activate PDP Context Request message from 410 is accepted and also conveys the PDP address for UE 1's communication session.

After receiving the Activate PDP Context Accept message in 450 (e.g., which conveys the PDP address to be used for the session), UE 1 may begin to send and receive messages related to the established communication session, 455.

As will be appreciated by one of ordinary skill in the art, while the PDP context can indicate the PDP-type (e.g., primary or secondary), PDP parameters (e.g., ToS, APN, QoS, PDP address, etc.), identifiers (e.g., NSAPI, TI, TEID, etc.) and/or other parameters, conventional PDP contexts do not include information related to the application or service associated with the GPRS communication session being activated and are supported by UE 1. For example, if the GPRS communication session corresponds to the signaling of a PTT call that UE 1 wishes to initiate or join, the signaling of PTT call is a highly delay-sensitive interactive application. However, the SGSN 160 and GGSN 165 may recognize that the application is an originating interactive call but do not necessarily have special knowledge with regard to the nature of the application, and as such do not know that the session is delay or time-sensitive. Thus, the SGSN 160 and GGSN 165 do not necessarily grant aggressive resources to UE 1, which can degrade performance for UE 1's communication session.

Embodiments which will be described below in more detail are directed to conveying application or service-specific information from a UE requesting PDP context activation to the RAN 120, SGSN 160 and/or GGSN 165, and storing the conveyed application or service-specific information in the PDP context. The RAN 120, SGSN 160 and/or GGSN 165 may then allocate resources to the requesting UE for the communication session based at least in part on the application or service-specific information.

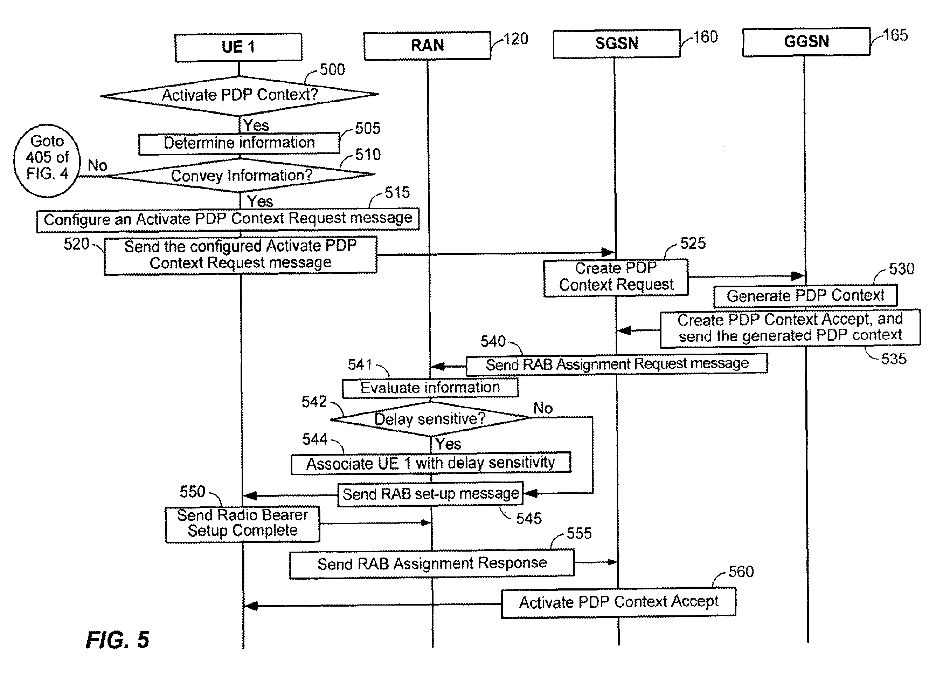

Accordingly, FIG. 5 illustrates a process for activating a PDP context according to an embodiment of the invention. In particular, FIG. 5 illustrates a manner of activating a PDP context for a given GPRS communication service and/or application that is configured to include application or service-specific information related to potential sessions invoked for the service and/or application.

Referring to FIG. 5, UE 1 determines whether to active a PDP context, 500. For example, the determination of 400 may be performed when UE 1 powers-up even if UE 1 does not wish to immediately join or initiate a PTT call or other delay-sensitive application, such that UE 1 determines to activate the PDP context for the application and/or service even in the absence of an immediate desire to conduct a communication session for the application and/or service. Accordingly, it will be appreciated that the PDP context activation may be a preemptive activation to a particular service or application that occurs prior to a setup of a communication session involving the particular service or application. For example, the preemptive activation may occur when UE 1 powers-up such that the RAN 120, SGSN 160 and/or GGSN 165 is aware that UE 1 is active for the particular service and/or application even when UE 1 is not currently engaged in, or requesting initiation of, a communication session.

After determining to activate the PDP context for the given GPRS communication session, service and/or application in 500, UE 1 determines, if possible, application or service-specific information related to the GPRS communication service and/or application, 505. As used herein, application or service-specific information is defined as any information related to a service or application supported by UE 1. With regard to the group PTT call example, the application or service-specific information may correspond to recognition that UE 1 is a group-member of one or more PTT groups.

In 510, UE 1 determines whether to convey the application or service-specific information determined in 505 to the SGSN 160 and/or the GGSN 165. For example, if the GPRS communication service and/or application is not delay-sensitive, then UE 1 may determine not to send application-specific information in 510, and the process may advance to 405 of FIG. 4, as described above. Otherwise, if UE 1 determines to convey the application or service-specific information determined in 505 to the SGSN 160 and/or the GGSN 165 (e.g., if the GPRS communication service and/or application is delay-sensitive, etc.), then the process advances to 515.

In 515, UE 1 configures an Activate PDP Context Request message that includes information related to UE 1 for the GPRS communication service and/or application, similar to 405 of FIG. 4. For example, the Activate PDP Context Request message may be configured to include UE 1's an access point name (APN) of the GGSN 165 (e.g., which may be obtained after a DNS query), etc. In the Activate PDP Context Request message, the PDP Address field, to which packets are addressed during sessions invoked for the GPRS communication service and/or application, is empty because the PDP context for UE 1's service and/or application has not yet been activated.

However, in 515 of FIG. 5, the Activate PDP Context Request message is further configured to indicate the application or service-specific information related to the GPRS communication service and/or application that is determined in 505 of FIG. 5. The application or service-specific information can be included within the Activate PDP Context Request message in a number of ways. For example, one or more fields within the Activate PDP Context Request message itself can be modified to include a flag that indicates the application or service-specific information.

In a more specific example, UE 1 can configure the Activate PDP Context Request message (e.g., for primary PDP context) and/or the Activate Secondary PDP Context Request (e.g., for secondary PDP context) in 515 to include special QoS configuration(s), such that the GGSN 165 and SGSN 160 can uniquely identify UE 1 within the operator's network based on the special configuration. Also, since the SGSN 160 will pass the QoS to the RNC at the RAN 120 in the RAB Assignment Request message (utilizing the RAB Parameter field) (e.g., see 540, below), the RNC or RAN 120 can also identify UE 1 based on the special QoS configuration, and hence allocate UTRAN resources required by the multimedia application (e.g., aggressive UTRAN_DRX_CYCLE, which is used to determine the paging cycle at UE 1).

In yet another example, in 515, UE 1 can select a reserved NSAPI (e.g., such as 0 to 4, which are currently prohibited and not used by standard), and include the reserved NSAPI in the Activate PDP Context Request and/or Activate Secondary PDP Context Request. As in the previous example, the GGSN 165 and SGSN 160 will read the message(s) and be able to uniquely identify the reserved NSAPI as being for a particular multimedia application and/or service (e.g., such as one that is known to require a high-level or aggressive-level of QoS). Also, since the RAB ID in the RAB Assignment Request (e.g., see 540, below) is mandated to be the same value of NSAPI, the RAN 120 can identify UE 1 based on the RAB ID.

In an alternative embodiment, special or predetermined bits can be embedded in the NSAPI information element (IE). The NSAPI IE is 8 bits, where the first 4 LSB are used to carry the NSAPI and the last 4 LSB are spare bits. Thus, in this example, UE 1 can utilize the 4 spare bits in the NSAPI IE for the SGSN 160 and GGSN 165 to identify UE 1. Since RAB ID IE = NSAPI IE per standard, the RAN 120 can identify UE 1 and can assign aggressive UTRAN_DRX CYCLE to UE 1.

In yet another alternative example, an APN is a string parameter included in the Activate PDP Context Request used to select the GGSN 165. Accordingly, in 515, UE 1 can put a keyword in the APN for identifying UE 1 has having a high-QoS requirement. The GGSN 165 and SGSN 160 can receive the APN in the Activate PDP Context Request. However, the RAN 120 may not necessarily be informed of UE 1's high-QoS requirement for a particular application and/or service in this example (e.g., although the RAN 120 can be instructed to allocate an aggressive QoS setting via the RAB Assignment Request message from the SGSN in 540, below). For example, the SGSN may override the Requested QoS in the Activate PDP Context Request, and can send the new or overridden QoS to the serving RNC at the RAN 120 within the RAB Parameter field in the RAB Assignment message. The new QoS may contain configurations or QoS attributes not in the Requested QoS (e.g., for interactive class traffic, the attribute of allocation/retention priority (ARP) can only be assigned by the SGSN/GGSN) for the serving RNC to uniquely identify UE subscribing to a particular application (e.g., a PTT service), or more specifically, the application's RAB.

After configuring the Activate PDP Context Request message in 515, UE 1 sends the configured Activate PDP Request message to the SGSN 160 via the RAN 120, 520. The SGSN 160 receives the Activate PDP Context Request message and sends a Create PDP Context Request message, which also includes the application or service-specific information, to the GGSN 165, 525. The GGSN 165 receives the Create PDP Context Request message from the SGSN 160, and activates a PDP context for UE 1's communication service and/or application, 530. The activation of the PDP context in 530 includes assigning a PDP address for UE 1's communication service and/or application (e.g., an IPv6 address). The activation of 530 also includes storing, within the PDP context, the application or service-specific information for UE 1's communication service and/or application.

The GGSN 165 sends a Create PDP Context Accept message back to the SGSN 160, 535, which indicates that the Create PDP Context Request message from 525 is accepted and also conveys the PDP address and application or service-specific information for UE 1's communication service and/or application. The SGSN 160 generates the RAB assignment request and includes, within the RAB assignment request, information from which the RAN 120 (e.g., more specifically, the serving RNC at the RAN 120) can determine the application or service-specific information of UE 1. The SGSN then sends the RAB assignment request to the RAN 120, 540. For example, in the RAB assignment request, the SGSN 160 may instruct the RAN 120 with regard to a given level of QoS resources for allocating to UE 1 during sessions invoked for the communication service and/or application using the RAB Parameter field in the RAB Assignment Request, which contains the QoS requirements on UE 1's communication link. If the application or service-specific information indicates, to the SGSN 160 in this example, that a high-level of QoS resources are required, the SGSN 160 can instruct the RAN 120 to allocate a higher amount of QoS resources to UE 1 than would otherwise be allocated in 540. In another example, a frequency at which UE 1 wakes up (e.g., a DRX cycle) can be increased if the application or service-specific information indicates, to the SGSN 160 in this example that UE 1's communication service and/or application may benefit from a more aggressive paging cycle due to delay sensitivity of the service and/or application.

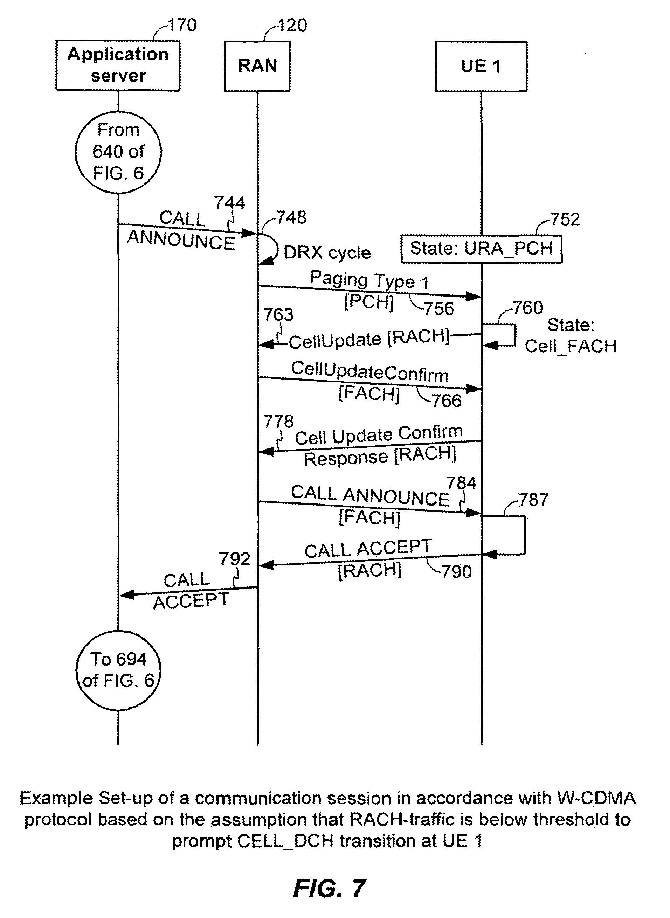

Conventionally, a UE transitions to CELL_FACH state after a page is detected in URA_PCH or CELL_PCH state or when the UE is requested by a user to send reverse link data. In CELL_FACH state, as discussed above, UEs are permitted to transmit on the RACH. However, because the RACH is a shared channel, there is a potential for collisions on the RACH. A scenario wherein UEs continuously transmit data at each frame and collide with other UEs such that the RAN 120 cannot decode the RACH due to interference can be reduced and/or avoided by distributing a Persistence value to the UEs within a System Parameters message. The Persistence values allocate, to each UE, a probabilistic value from which each UE independently determines when the RACH can be accessed. The random nature of the Persistence value reduces the probability of multiple continuous collisions. However, as will be discussed in more detail below with respect to FIG. 7, accessing the RACH in this nature can be problematic in delay sensitive applications because the Persistence value may cause delay in terms of when the UE is allowed to transmit, and collisions on the RACH can cause further delay.

In another example, the persistence test is just one of the reasons as to why using the RACH can cause delay. In this example, the persistence test can be logically bypassed if RNC intentionally configures the Persistence Probability to 1, such that a RACH-access attempt is guaranteed in CELL_FACH state when a UE wants to transmits data. If the RACH has a relatively low data rate, uplink user data may be segmented into multiple RACH transmissions by the UE. Since the RACH is not power controlled and has no HARQ protection, any information being lost one of the segments can either cause an error to the user data or trigger higher layer retransmission, either of which delays the time it takes a UE to transfer its data to the RAN 120.

Thus, an additional transition from CELL_FACH state to CELL_DCH state is ordered by the RAN 120 when FACH and/or RACH traffic rises above a threshold. For example, conventionally, the state transition for CELL_FACH to CELL_DCH is based on a traffic volume measurement (TVM) on a transport channel. Generally, the dormant UE will be placed in CELL_FACH state with a C-RNTI after the Cell Update procedure triggered by uplink data transmission or paging. The serving RNC at the RAN 120 may configure the UE to send a measurement report for TVM when the buffered data on the Radio Bearer(s) mapped to the measured transport channel exceeds reporting threshold. The serving RNC at the RAN 120 will consider the DL traffic volume and the reported UL traffic volume and decide whether to move the UE to CELL_DCH. If the serving RNC at the RAN 120 decides to move the UE to CELL_DCH, the RAN 120 sends a reconfiguration message (e.g., a physical channel reconfiguration, a transport channel reconfiguration, a radio bearer reconfiguration, etc.) to the UE to change the RRC state to CELL_DCH.

The transition of UEs from CELL_FACH state to CELL_DCH state reduces the load on the RACH and/or FACH, and UEs that are assigned a dedicated channel can transmit without the risk of collisions (e.g., because each dedicated channel is only assigned to one UE). However, for delay sensitive applications, waiting for the FACH and/or RACH traffic to rise above the threshold can delay the transition of the UE to CELL_DCH state, which can cause delay during call setup of a delay sensitive communication session.

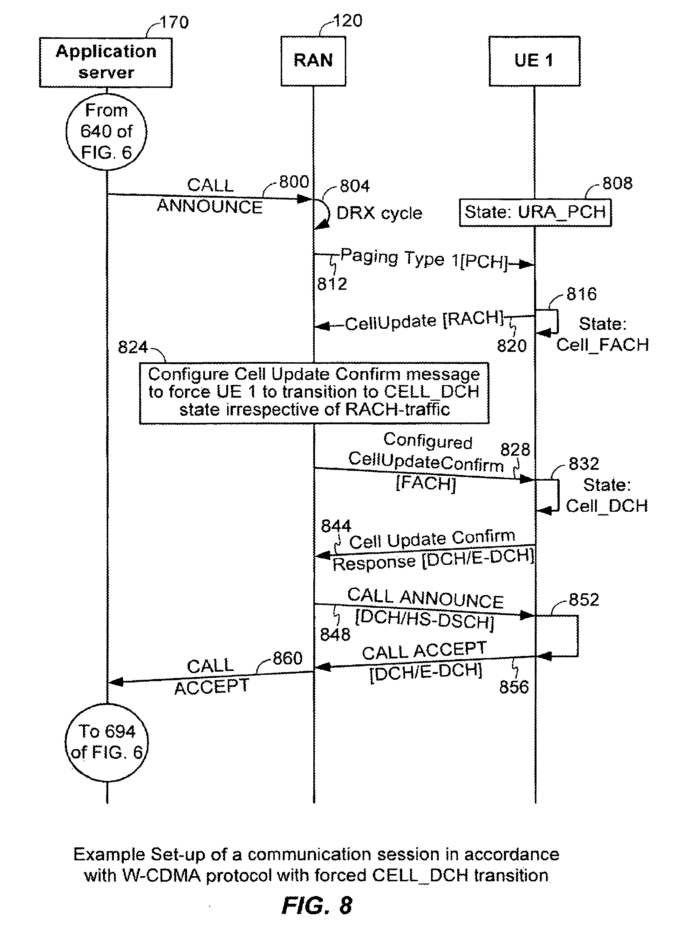

Accordingly, in 541, the serving RNC at the RAN 120 evaluates the application or service-specific information included in the Activate PDP Context Request message from UE 1 (e.g., based on RAB parameters in the RAB assignment request that indicate the application or service-specific information to trigger special handling protocols by the RAN 120), to determine if UE 1's GPRS communication service and/or application is delay sensitive. If the serving RNC of the RAN 120 determines that UE 1's GPRS communication service and/or application is not delay sensitive in 542, then the process advances to 545 and the RAN 120 sends a Radio Bearer Setup message for UE 1's communication service and/or application based on the RAB parameters, 545. Alternatively, if the serving RNC of the RAN 120 determines that UE 1's GPRS communication service and/or application is delay sensitive in 542, then the process advances to 544, and the serving RNC of the RAN 120 associates UE 1 with forced CELL_DCH state transitions during call setup when UE 1 is a target UE, 544, as will be described in greater detail below with respect to FIG. 8.

Accordingly, the RAN 120 receives the RAB assignment request and sends a Radio Bearer Setup message for UE 1's communication service and/or application based on the RAB parameters, 545. UE 1 receives the Radio Bearer Setup message, and sends a Radio Bearer Setup Complete message to the RAN 120, 550. The RAN 120 then sends a RAB Assignment Response message back to the SGSN 160, 555.

At this point, the SGSN 160 sends an Activate PDP Context Accept message to UE 1 via the RAN 120, 560, which indicates that the Activate PDP Context Request message from 520 is accepted and also conveys the PDP address for UE 1's communication service and/or application. While not shown in FIG. 5, after receiving the Activate PDP Context Accept message (e.g., which conveys the PDP address to be used for the service and/or application), UE 1 may begin to send and receive messages related to a session established for the activated GPRS communication service and/or application.

Accordingly, as will be appreciated by one of ordinary skill in the art, FIG. 5 shows how the RAN 120 (e.g., a serving RNC of the RAN 120), the SGSN 160 and/or the GGSN 165 can be informed, by the UE 1, with regard to UE 1 being 'active' for a particular application and/or service. In particular, the RAN 120 can detect an association between UE 1 or the RAB for UE 1, such that special call handling protocols can be applied to setting up communication session involving UE 1, as will be discussed below in more detail with respect to FIG. 8.

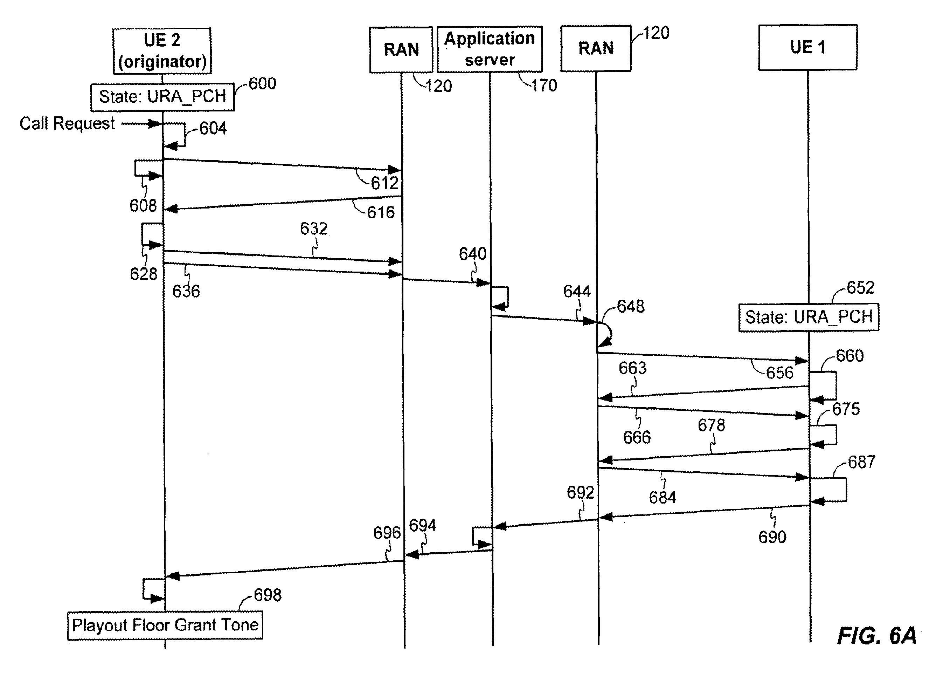

Accordingly, a process by which a server-arbitrated communication session can be set-up is described with respect to FIG. 6A. In particular, FIG. 6A illustrates a server-arbitrated session set-up process wherein the system 100 corresponds to a Universal Mobile Telecommunications System (UMTS) that uses Wideband Code Division Multiple Access (W-CDMA). However, it will be appreciated by one of ordinary skill in the art how FIG. 6A can be modified to be directed to communication sessions in accordance with protocols other than W-CDMA.

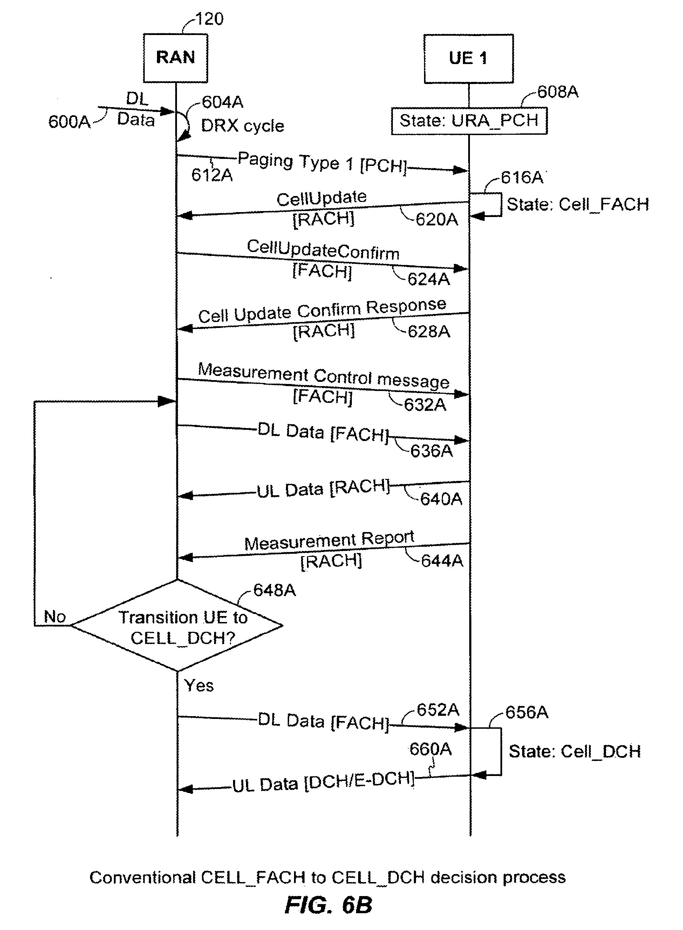

Referring to FIG. 6A, 600 through 698 generally correspond to blocks 400 through 498, respectively, of FIG. 4, of co-pending U.S. Provisional Application No. 61/180,645, entitled "ANNOUNCING A COMMUNICATION SESSION WITHIN A WIRELESS COMMUNICATIONS SYSTEM", filed May 22, 2009, assigned to the assignee hereof and hereby expressly incorporated by reference herein in its entirety. Accordingly, a detailed discussion of FIG. 6A has been omitted for the sake of brevity. However, it will be appreciated that the transition of UE 1 from CELL_FACH state to CELL_DCH state in 675 is optional, and if present, is triggered, in part, by measurement reports from UEs, as will be described in greater detail below with respect to FIG. 6B. Thus, certain channels upon which messages can be transmitted vary (e.g., between DCH, E-DCH, RACH and/or FACH) based on the state of the UE. For example, it is also possible that UE 1 remains in CELL_FACH state throughout the communication session setup process, as illustrated in FIG. 7.

FIG. 6B illustrates a conventional process by which the RAN 120 can determine whether to transition a particular UE from CELL_FACH state to CELL_DCH state. Referring to FIG. 6B, the RAN 120 receives downlink data for transmission to UE 1, 600A. As will be appreciated by one of ordinary skill in the art, the RAN 120 cannot simply transmit the downlink data to UE I immediately after receiving the data. Rather, the RAN 120 waits for a next DRX cycle or paging cycle at which target UE 1 is expected to be monitoring for pages, 604A. For convenience of explanation, it may be assumed that UE 1 is in URA_PCH state at this point, 608A, and is monitoring the PCH and/or PICH in accordance with a given DRX cycle. While not shown in FIG. 6B, if UE 1 already had an active traffic channel (TCH), the RAN 120 could simply send the downlink data on the already-allocated TCH. After the RAN 120 waits for the DRX cycle or paging cycle of UE 1, a type 1 paging message is sent to UE 1, 612A.

Upon receiving the page message, UE 1 transitions to CELL_FACH state, 616A, and UE 1 sends a cell update message on the RACH that includes the U-RNTI for UE 1, 620A. In 624A, the RAN 120 configures and transmits a Cell Update Confirm message to UE 1. In 628A, the RAN 120 sends UE 1 a measurement control message that instructs UE 1 with regard to when to measurement reports to the RAN 120. It will be appreciated that the measurement control message can alternatively be sent at an earlier point in time (e.g., when UE 1 is in URA_PCH state). The measurement control message conveys information such as time to trigger, a reporting threshold and/or a traffic event identify parameter (e.g., 4a or 4b, because there are two traffic volume events define in standard: 4a means above the threshold and 4b means below the threshold) from which UE 1 can determine whether or not to send a measurement report to the RAN 120. Thus, when the relationship specified by the traffic identify parameter is satisfied with respect to a measured amount of RBs over the RACH and the reporting threshold for the time period specified by the time to trigger, the UE sends a measurement report.

Next, the RAN 120 and UE 1 exchange downlink data on the FACH, 636A, and uplink data on the RACH, 640A. In 644A, assume that UE 1 sends a measurement report based on its measured channel conditions and the instructions from the measurement control message, 644A. For example, UL data arrives from an application running on the UE and the Buffer occupancy of the RBs over RACH exceeds the report threshold for a configured period of time (i.e. time to trigger). In this example, this scenario will trigger a measurement report for event 4a.

The RAN 120 receives the measurement report and determines whether to transition UE 1 from CELL_FACH to CELL_DCH state, 648A. For example, the determination of 648A may be based on based on the UL traffic Volume (e.g., measured and reported by UE 1 in the measurement report) and also based on DL traffic Volume (e.g., measured by the serving RNC). If the RAN 120 determines not to transition UE 1 to CELL_DCH state, the process returns to 636A. Otherwise, if the RAN 120 determines to transition UE 1 to CELL_DCH state, the RAN 120 sends a physical channel reconfiguration message to UE 1 on the FACH in 652A (e.g., including RRC State = CELL_DCH, New E-RNTI, H-RNTI, and L1/L2 configuration parameters), UE 1 transitions itself to CELL_DCH state, 656A, and UE 1 then transmits a reconfiguration channel complete message on its assigned dedicated channel, 660A.

Next, FIG. 7 illustrates a portion of the process of FIG. 6A under the assumption that the RAN 120 determines not to transition UE 1 from CELL_FACH to CELL_DCH state (e.g., in contrast to 648A of FIG. 6B). Thus, while not shown in FIG. 7, the process of FIG. 6B overlaps, in part, with the process of FIG. 7, such that it is possible that UE 1 sends one or more measurement reports and the RAN 120 makes the transition decision at 648A. It is assumed, however, that no transition to CELL_DCH state actually occurs in FIG. 7.

Referring to FIG. 7, the application server 170 processes a call request message from a call originator ("UE 2"), and generates an announce message for announcing the communication session to target UE 1 and forwards the announce message to the RAN 120, 744. As will be appreciated by one of ordinary skill in the art, the RAN 120 cannot simply transmit the announce message to UE 1 immediately after receiving the call announce message from the application server 170. Rather, the RAN 120 waits for a next DRX cycle or paging cycle at which target UE 1 is expected to be monitoring for pages, 748. For convenience of explanation, it may be assumed that UE 1 is in URA_PCH state at this point, 752, and is monitoring the PCH and/or PICH in accordance with a given DRX cycle. While not shown in FIG. 7, if UE 1 already had an active traffic channel (TCH), the RAN 120 could simply send the announce message on the already-allocated TCH. After the RAN 120 waits for the DRX cycle or paging cycle of UE 1, a type 1 paging message is sent to UE 1, 756. As will be appreciated by one of ordinary skill in the art, a type 1 page message corresponds to a page sent on a downlink paging channel (PCH), contrasted with a type 2 page message that corresponds to on a downlink DCH or FACH (which is not yet available because UE 1 are assumed to be in URA_PCH state). As will be appreciated by one of ordinary skill in the art, when the UE is in CELL_DCH or CELL_FACH state, the UTRAN RRC Layer of the RAN 120 would page the UE by transmitting a paging type 2 message on E-DCH, DCH or FACH. As with paging type 1, the UE's RRC Layer notifies the upper layers of a core network (CN) domain and paging cause. Paging type 2 is used to deliver a second call while the UE is already active in another call (e.g., simultaneous voice and data).

Upon receiving the page message, UE 1 transitions to CELL_FACH state, 760, and UE 1 sends a cell update message on the RACH that includes the U-RNTI for UE 1, 763. In 766, the RAN 120 configures and transmits a Cell Update Confirm message to UE 1. Unlike the embodiment illustrated in FIG. 6A which illustrates a potential state transition from CELL_FACH to CELL_DCH, which can be based on decision logic shown in FIG. 6B, assume that UE 1 does not move to CELL_DCH state in FIG. 7. Thus, UE 1 still transmits a cell update confirm response message (e.g., a Radio Bearer Reconfiguration Complete message, a Transport Channel Reconfiguration Complete message and/or a Physical Channel Reconfiguration Complete message, based on whether the Radio Bearer, Transport Channel or Physical Channel is the higher layer to be reconfigured in the Cell Update Confirm message of 766) to the RAN 120 in 778. However, in 778, the transmission of the cell update confirm message occurs on the RACH instead of on the uplink E-DCH or DCH.

At some point after receiving the cell update confirm response message in 778, the RAN 120 sends the announce message to UE 1 on the FACH (e.g., instead of the HS-DSCH as in 684 of FIG. 6A, because UE 1 remains in CELL_FACH state), 784. After receiving the announce message, UE 1 can auto-accept the announce message (e.g., if the announced call is an emergency call), can auto-reject the announce message (e.g., if UE 1 is already engaged in another session) or can allow a user of UE 1 to determine whether to accept the announced call. The delay during which UE 1 processes the announce message to determine whether to accept the call corresponds to block 787 in FIG. 7. For convenience of explanation, assume that UE 1 determines to accept the announced call, and as such UE 1 sends a call accept message on the RACH (e.g., instead of the uplink E-DCH to the RAN 120 as in 690 of FIG. 6A), 790, which then forwards the call accept message to the application server 170, 792.

As discussed above, transmissions on the RACH can be delayed due either to (i) access permissions related to Persistence values assigned to the UEs, (ii) collisions with transmissions of other UEs and/or (iii) higher-layer errors or retransmissions if one or more segments of a multi-segment data transmission on the RACH are lost. However, these delays conventionally are not avoidable in cases where the CELL_DCH transition is not performed due to RACH or FACH traffic remaining below a given threshold. Accordingly, embodiments of the invention are directed to forcing certain UEs (e.g., UEs that are known by the RAN 120 to have subscribed to a delay-sensitive communication service and/or application) to transition to CELL_DCH state preemptively irrespective of the level of traffic or interference on the RACH.

FIG. 8 illustrates a portion of the process of FIG. 6A in accordance with an embodiment of the invention. Referring to FIG. 8, the application server 170 processes a call request message from a call originator ("UE 2"), and generates an announce message for announcing the communication session to target UE 1 and forwards the announce message to the RAN 120, 800. As will be appreciated by one of ordinary skill in the art, the RAN 120 cannot simply transmit the announce message to UE 1 immediately after receiving the call announce message from the application server 170. Rather, the RAN 120 waits for a next DRX cycle or paging cycle at which target UE 1 is expected to be monitoring for pages, 804. For convenience of explanation, it may be assumed that UE 1 is in URA_PCH state at this point, 808, and is monitoring the PCH and/or PICH in accordance with a given DRX cycle. While not shown in FIG. 8, if UE I already had an active traffic channel (TCH), the RAN 120 could simply send the announce message on the already-allocated TCH. After the RAN 120 waits for the DRX cycle or paging cycle of UE 1, a type 1 paging message is sent to UE 1, 812.

Upon receiving the page message, UE 1 transitions to CELL_FACH state, 816, and UE 1 sends a cell update message on the RACH that includes the U-RNTI for UE 1, 820. In 824, assume that the RAN 120 is aware of UE 1's association with a delay sensitive service and/or application from 544 of FIG. 5. Accordingly, the RAN 120 determines to force UE 1 to transition to CELL_DCH state, irrespective of whether the RACH-traffic or FACH-traffic for UE 1 is above the given threshold. Thus, the RAN 120 configures a Cell Update Confirm message that assigns dedicated physical channel(s) for DCH or for the E-DCH with an E-RNTI if the E-DCH is to be used by UE 1 for uplink data transmissions, 824. After configuring the cell update confirm message, the RAN 120 transmits the cell update confirm message to UE 1, 828.

Upon receiving the cell update confirm message in 828, UE 1 immediately transitions to CELL_DCH state, 832. Referring to FIG. 8, after 832, UE 1 transmits a cell update confirm response message (e.g., a Radio Bearer Reconfiguration Complete message, a Transport Channel Reconfiguration Complete message and/or a Physical Channel Reconfiguration Complete message, based on whether the Radio Bearer, Transport Channel or Physical Channel is the higher layer to be reconfigured in the Cell Update Confirm message of 828) to the RAN 120 in 844. As will be appreciated, in 844, the transmission of the cell update confirm message occurs on the uplink E-DCH or DCH, instead of the RACH.

At some point after receiving the cell update confirm response message in 844, the RAN 120 sends the announce message to UE 1 on the HS-DSCH, 848. After receiving the announce message, UE 1 can auto-accept the announce message (e.g., if the announced call is an emergency call), can auto-reject the announce message (e.g., if UE 1 is already engaged in another session) or can allow a user of UE 1 to determine whether to accept the announced call. The delay during which UE 1 processes the announce message to determine whether to accept the call corresponds to block 852 in FIG. 8. For convenience of explanation, assume that UE 1 determines to accept the announced call, and as such UE 1 sends a call accept message on the DCH or E-DCH to the RAN 120, 856, which then forwards the call accept message to the application server 170, 860.

Accordingly, by forcing UE 1 to transition to CELL_DCH state even if decision block 648A of FIG. 6B would not have conventionally transitioned UE 1 to CELL_DCH state, the call setup time for UE 1's delay sensitive communication session can be reduced.

While above-described embodiments of the invention have generally been described with respect to terminology that is specific to CDMA, W-CDMA and/or EV-DO protocols, it will be appreciated that other embodiments of the invention can be modified to comply with other wireless telecommunication protocols, such as UMTS LTE and/or SAE, in an example. For example, in a UMTS implementation, the above-described call flows are still generally applicable. However, the terminology of PDP context, RNC (or RNC 122), SGSN and GGSN may instead be described as Evolved Packet System (EPS) bearer, eNodeB, Serving Gateway (GW) and packet data network (PDN) GW, respectively. Accordingly, the technical modifications to conform the CDMA implementation described above to a UMTS implementation are well within the abilities of one of ordinary skill in the art.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., access terminal). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims.

## Claims

1. A method of operating an access network configured to support communication sessions within a wireless communications system operating in accordance with a given wireless communication protocol, comprising: receiving data at an access network for transmission to a user equipment, UE, that is not in a dedicated-channel state; determining that the received data is associated with a communication session of a given type; determining to transition the UE to a dedicated-channel state based on the received data's association with the communication session of the given type; and sending a reconfiguration message to the UE to transition the UE to the dedicated-channel state, the method **characterised by** the step of the received data corresponding to a call announcement message for announcing the communication session to the UE.

2. The method of claim 1, further comprising: receiving an indication from the UE that the UE has completed its transition to the dedicated-channel state; and transmitting the received data to the UE on a downlink channel.

3. The method of claim 2, wherein the downlink channel corresponds to a downlink dedicated channel, DCH, or a high-speed downlink shared channel, HS- DCH.

4. The method of claim 1, further comprising: paging the UE after the receiving step; receiving a page response from the UE, wherein the reconfiguration message is sent in response to the page response.

5. The method of claim 1, further comprising: before receiving the data for transmission to the UE, receiving a notification of a Radio Bearer, RAB, that is associated with communication sessions of the given type for the UE.

6. The method of claim 5, wherein the determination that the received data is associated with the communication session of the given type is based on determining whether a RAB associated with the received data corresponds to the RAB from the received notification.

7. The method of claim 1, wherein the determination to transition the UE to the dedicated-channel state is performed irrespective of whether traffic associated with the UE is above a traffic threshold that is established for triggering transitions of UEs to the dedicated-channel state.

8. A method of operating a user equipment, UE, configured to participate in communication sessions within a wireless communications system operating in accordance with a given wireless communication protocol, comprising: determining to activate a data session for the UE; configuring, based on the determination, a data session activation request message to include an indication of an association with communication sessions of a given type; transmitting the data session activation request message to an access network; receiving a page from the access network when the UE is not in a dedicated- channel state that indicates that the access network has data to be transmitted to the UE, the data to be transmitted to the UE associated with a communication session of the given type; sending a page response to the access network; and the method **characterised by** the step of receiving, responsive to the page response and based on the data's association with the communication session of the given type, a reconfiguration message from the access network that instructs the UE to transition to the dedicated-channel state, wherein the data to be transmitted to the UE corresponds to a call announcement message for announcing the communication session of the given type to the UE.

9. The method of claim 8, further comprising: completing the transition to the dedicated-channel state at the UE; notifying the access network of the transition-completion; and receiving the data from the access network on a downlink channel in response to the notification.

10. The method of claim 3 or claim 9, wherein the downlink channel corresponds to a downlink dedicated channel, DCH, or a high-speed downlink shared channel, HS-DSCH.

11. The method of claim 8, wherein the data session corresponds to a packet data protocol, PDP, Context, the data session activation request message corresponds to an Activate PDP Context Request message and the received set-up message corresponds to a Radio Bearer, RAB, Setup message.

12. The method of claim 8, wherein the configuring step includes the indication that the UE is associated with the communication sessions of the given type by inserting a flag into one or more fields of the data session activation request message.

13. An access network (120) configured to support communication sessions within a wireless communications system (100) operating in accordance with a given wireless communication protocol, comprising: means for receiving data at an access network (120) for transmission to a user equipment ,UE, (200) that is not in a dedicated-channel state;
means for determining that the received data is associated with a communication session of a given type; means for determining to transition the UE (200) to a dedicated-channel state based on the received data's association with the communication session of the given type;
means for sending a reconfiguration message to the UE (200) to transition the UE (200) to the dedicated-channel state; and **characterised in that** the received data corresponds to a call announcement message for announcing the communication session to the UE (200).

14. A user equipment ,UE, (200) configured to participate in communication sessions within a wireless communications system (100) operating in accordance with a given wireless communication protocol, comprising: means for determining to activate a data session for the UE (200); means for configuring, based on the determination, a data session activation request message to include an indication of an association with communication sessions of a given type; means for transmitting the data session activation request message to an access network (120); means for receiving a page from the access network (120) when the UE (200) is not in a dedicated-channel state that indicates that the access network (120) has data to be transmitted to the UE (200), the data to be transmitted to the UE (200) associated with a communication session of the given type; means for sending a page response to the access network (120); **characterised in that** the means for receiving, responsive to the page response and based on the data's association with the communication session of the given type, a reconfiguration message from the access network (120) that instructs the UE (200) to transition to the dedicated- channel state; and wherein the data transmitted to the UE (200) corresponds to a call announcement message for announcing the communication session of the given type to the UE (200).

15. A non-transitory computer-readable storage medium containing instructions which, when executed by an access network configured to support communication sessions within a wireless communications system operating in accordance with a given wireless communication protocol, cause the access network to perform operations, the instructions comprising: program code to receive data at an access network for transmission to a user equipment, UE, that is not in a dedicated-channel state; program code to determine that the received data is associated with a communication session of a given type; program code to determine to transition the UE to a dedicated-channel state based on the received data's association with the communication session of the given type; and program code to send a reconfiguration message to the UE to transition the UE to the dedicated-channel state; and **characterised by** the received data corresponding to a call announcement message for announcing the communication session to the UE.

16. A non-transitory computer-readable storage medium containing instructions which, when executed by a user equipment, UE, configured to participate in communication sessions within a wireless communications system operating in accordance with a given wireless communication protocol, cause the UE to perform operations, the instructions comprising: program code to determine to activate a data session for the UE; program code to configure, based on the determination, a data session activation request message to include an indication of an association with communication sessions of a given type; program code to transmit the data session activation request message to an access network; program code to receive a page from the access network when the UE is not in a dedicated-channel state that indicates that the access network has data to be transmitted to the UE, the data to be transmitted to the UE associated with a communication session of the given type; program code to send a page response to the access network; **characterised by** program code to receive, responsive to the page response and based on the data's association with the communication session of the given type, a reconfiguration message from the access network that instructs the UE to transition to the dedicated- channel state; and wherein the data transmitted to the UE corresponds to a call announcement message for announcing the communication session of the given type to the UE.

## Patentansprüche

1. Ein Verfahren zum Betreiben eines Zugriffsnetzwerks, das konfiguriert ist zum Unterstützen von Kommunikationssitzungen in einem Drahtloskommunikationssystem, das gemäß einem gegebenen Drahtloskommunikationsprotokoll arbeitet, das Folgendes aufweist:
Empfangen von Daten bei einem Zugriffsnetzwerk zur Sendung bzw. Übertragung an eine Nutzereinrichtung bzw. UE (UE = user equipment), die nicht in einem Zustand mit dediziertem Kanal ist;
Bestimmen, dass die empfangenen Daten mit einer Kommunikationssitzung eines gegebenen Typs assoziiert sind; Bestimmen, dass die UE in einen Zustand mit dediziertem Kanal übergehen soll, basierend auf einer Assoziation der empfangenen Daten mit der Kommunikationssitzung des gegebenen Typs; und Senden einer Rekonfigurationsnachricht an die UE, dass die UE in den Zustand mit dediziertem Kanal übergehen soll, wobei das Verfahren durch den Schritt charakterisiert ist, dass die empfangenen Daten einer Anrufankündigungsnachricht zum Ankündigen der Kommunikationssitzung gegenüber der UE entsprechen.

2. Verfahren nach Anspruch 1, das weiter Folgendes aufweist: Empfangen einer Anzeige von der UE, dass die UE ihren Übergang in den Zustand mit dediziertem Kanal abgeschlossen hat; und Senden der empfangenen Daten an die UE auf einem Abwärtsverbindungskanal.

3. Verfahren nach Anspruch 2, wobei der Abwärtsverbindungskanal einem dedizierten Abwärtsverbindungskanal bzw. DCH (DCH = downlink dedicated channel) oder einem gemeinsam verwendeten Hochgeschwindigkeitsabwärtsverbindungskanal bzw. HS-DSCH (HS-DSCH = high-speed downlink shared channel) entspricht.

4. Verfahren nach Anspruch 1, das weiter Folgendes aufweist: Pagen bzw. Funkrufen an die UE nach dem Empfangsschritt; Empfangen einer Page-Antwort von der UE, wobei die Rekonfigurationsnachricht ansprechend auf die Page-Antwort gesendet wird.

5. Verfahren nach Anspruch 1, das weiter Folgendes aufweist: vor dem Empfangen der Daten zur Übertragung an die UE, Empfangen einer Benachrichtigung eines Funkträgers bzw. RAB (RAB = Radio Bearer), der mit Kommunikationssitzungen des gegebenen Typs für die UE assoziiert ist.

6. Verfahren nach Anspruch 5, wobei die Bestimmung, dass die empfangenen Daten mit der Kommunikationssitzung des gegebenen Typs assoziiert sind auf dem Bestimmen basiert, ob ein RAB, der mit den empfangenen Daten assoziiert ist, dem RAB von der empfangenen Benachrichtigung entspricht.

7. Verfahren nach Anspruch 1, wobei die Bestimmung, dass die UE in den Zustand mit dediziertem Kanal übergehen soll, unabhängig davon durchgeführt wird, ob Verkehr, der mit der UE assoziiert ist, über einer Verkehrsschwelle liegt, die eingerichtet ist zum Auslösen von Übergängen von UEs in den Zustand mit dediziertem Kanal.

8. Ein Verfahren zum Betreiben einer Nutzereinrichtung bzw. UE (UE = user equipment), die konfiguriert ist zum Teilnehmen an Kommunikationssitzungen in einem Drahtloskommunikationssystem, das gemäß einem gegebenen Drahtloskommunikationsprotokoll arbeitet, das Folgendes aufweist: Bestimmen, dass eine Datensitzung für die UE aktiviert werden soll; Konfigurieren, basierend auf der Bestimmung, einer Datensitzungsaktivierungsanfragenachricht, so dass diese eine Anzeige einer Assoziation mit Kommunikationssitzungen eines gegebenen Typs beinhaltet; Senden bzw. Übertragen der Datensitzungsaktivierungsanfragenachricht an ein Zugriffsnetzwerk; Empfangen eines Pages bzw. Funkrufs von dem Zugriffsnetzwerk, wenn die UE nicht in einem Zustand mit dediziertem Kanal ist, der anzeigt, dass das Zugriffsnetzwerk Daten hat, die an die UE übertragen werden sollen, wobei die Daten, die an die UE übertragen werden sollen, mit einer Kommunikationssitzung des gegebenen Typs assoziiert sind; Senden einer Page-Antwort an das Zugriffsnetzwerk; und wobei das Verfahren **gekennzeichnet ist durch** den Schritt des Empfangens, ansprechend auf die Page-Antwort und basierend auf der Assoziation der Daten mit der Kommunikationssitzung des gegebenen Typs, einer Rekonfigurationsnachricht von dem Zugriffsnetzwerk, die die UE anweist, in den Zustand mit dediziertem Kanal überzugehen, wobei die Daten, die an die UE übertragen werden sollen, einer Anrufankündigungsnachricht zur Ankündigung der Kommunikationssitzung eines gegebenen Typs gegenüber der UE entsprechen.

9. Verfahren nach Anspruch 8, das weiter Folgendes aufweist: Abschließen des Übergangs in den Zustand mit dediziertem Kanal bei der UE; Benachrichtigen des Zugriffsnetzwerks des Übergangs-Abschlusses; und Empfangen der Daten von dem Zugriffsnetzwerk auf einem Abwärtsverbindungskanal ansprechend auf die Benachrichtigung.

10. Verfahren nach Anspruch 3 oder Anspruch 9, wobei der Abwärtsverbindungskanal einem dedizierten Abwärtsverbindungskanal bzw. DCH (DCH = downlink dedicated channel) oder einem gemeinsam verwendeten Hochgeschwindigkeitsabwärtsverbindungskanal bzw. HS-DSCH (HS-DSCH = high-speed downlink shared channel) entspricht.

11. Verfahren nach Anspruch 9, wobei die Datensitzung einem Paketdatenprotokollkontext bzw. PDP-Context (PDP = packet data protocol) entspricht, die Datensitzungsaktivierungsanfragenachricht einer Aktivierungs-PDP-Kontext-Anfragenachricht bzw. Activate-PDP-Context-Anfragenachricht entspricht und die empfangene Einrichtungsnachricht einer Funkträgereinrichtungs- bzw. RAB-Setup-Nachricht (RAB = Radio Bearer) entspricht.

12. Verfahren nach Anspruch 8, wobei der Konfigurationsschritt die Anzeige beinhaltet, dass die UE mit der Kommunikationssitzung des gegebenen Typs assoziiert ist, durch Einfügen eines Flags in eines oder mehrere Felder der Datensitzungsaktivierungsanfragenachricht.

13. Ein Zugriffsnetzwerk (120), das konfiguriert ist zum Unterstützen von Kommunikationssitzungen in einem Drahtloskommunikationssystem (100), das gemäß einem gegebenen Drahtloskommunikationsprotokoll arbeitet, das Folgendes aufweist: Mittel zum Empfangen von Daten bei einem Zugriffsnetzwerk (120) zur Sendung bzw. Übertragung an eine Nutzereinrichtung bzw. UE (UE = user equipment) (200), die nicht in einem Zustand mit dediziertem Kanal ist;
Mittel zum Bestimmen, dass die empfangenen Daten mit einer Kommunikationssitzung eines gegebenen Typs assoziiert sind; Mittel zum Bestimmen, dass die UE (200) in einen Zustand mit dediziertem Kanal übergehen soll, basierend auf der Assoziation der empfangenen Daten mit der Kommunikationssitzung des gegebenen Typs;
Mittel zum Senden einer Rekonfigurationsnachricht an die UE (200), dass die UE (200) in den Zustand mit dediziertem Kanal übergehen soll;
und, das **dadurch gekennzeichnet ist, dass** die empfangenen Daten einer Anrufankündigungsnachricht zum Ankündigen der Kommunikationssitzung gegenüber der UE (200) entsprechen.

14. Eine Nutzereinrichtung bzw. UE (UE = user equipment) (200), die konfiguriert ist zum Teilnehmen an Kommunikationssitzungen in einem Drahtloskommunikationssystem (100), das gemäß einem gegebenen Drahtloskommunikationsprotokoll arbeitet, die Folgendes aufweist: Mittel zum Bestimmen, dass eine Datensitzung für die UE (200) aktiviert werden soll; Mittel zum Konfigurieren, basierend auf der Bestimmung, einer Datensitzungsaktivierungsanfragenachricht, so dass diese eine Anzeige einer Assoziation mit Kommunikationssitzungen eines gegebenen Typs beinhaltet; Mittel zum Senden bzw. Übertragen der Datensitzungsaktivierungsanfragenachricht an ein Zugriffsnetzwerk (120); Mittel zum Empfangen eines Pages von dem Zugriffsnetzwerk (120), wenn die UE (200) nicht in einem Zustand mit dediziertem Kanal ist, der anzeigt, dass das Zugriffsnetzwerk (120) Daten hat, die an die UE (200) übertragen werden sollen, wobei die Daten, die an die UE (200) übertragen werden sollen, mit einer Kommunikationssitzung des gegebenen Typs assoziiert sind; Mittel zum Senden einer Page-Antwort an das Zugriffsnetzwerk (120); **dadurch gekennzeichnet, dass** die Mittel zum Empfangen, und zwar ansprechend auf die Page-Antwort und basierend auf der Assoziation der Daten mit der Kommunikationssitzung des gegebenen Typs, einer Rekonfigurationsnachricht von dem Zugriffsnetzwerk (120), die die UE (200) anweist, in den Zustand mit dediziertem Kanal überzugehen; und wobei die Daten, die an die UE (200) übertragen werden, einer Anrufankündigungsnachricht zur Ankündigung der Kommunikationssitzung des gegebenen Typs bei der UE (200) entsprechen.

15. Ein nicht-flüchtiges computerlesbares Speichermedium, das Instruktionen aufweist, die, wenn sie von einem Zugriffsnetzwerk ausgeführt werden, das konfiguriert ist, um die Kommunikationssitzungen in einem Drahtloskommunikationssystem zu unterstützen, das gemäß einem gegebenen Drahtloskommunikationsprotokoll arbeitet, das Zugriffsnetzwerk veranlassen, Operationen auszuführen, wobei die Instruktionen Folgendes aufweisen: Programmcode zum Empfangen von Daten bei einem Zugriffsnetzwerk zur Sendung bzw. Übertragung an eine Nutzereinrichtung bzw. UE (UE = user equipment), die nicht in einem Zustand mit dediziertem Kanal ist;
Programmcode zum Bestimmen, dass die empfangenen Daten mit einer Kommunikationssitzung eines gegebenen Typs assoziiert sind; Programmcode zum Bestimmen, dass die UE in einen Zustand mit dediziertem Kanal übergehen soll, basierend auf der Assoziation der empfangenen Daten mit der Kommunikationssitzung des gegebenen Typs; und Programmcode zum Senden einer Rekonfigurationsnachricht an die UE, um die UE in den Zustand mit dediziertem Kanal übergehen zu lassen;
und, **dadurch gekennzeichnet, dass** die empfangenen Daten einer Anrufankündigungsnachricht zum Ankündigen der Kommunikationssitzung gegenüber der UE entsprechen.

16. Ein nicht-flüchtiges computerlesbares Speichermedium, das Instruktionen aufweist, die, wenn sie von einer Nutzereinrichtung bzw. UE (UE = user equipment) ausgeführt werden, die konfiguriert ist zum Teilnehmen an Kommunikationssitzungen in einem Drahtloskommunikationssystem, das gemäß einem gegebenen Drahtloskommunikationsprotokoll arbeitet, die UE veranlassen, Operationen auszuführen, wobei die Instruktionen Folgendes aufweisen: Programmcode zum Bestimmen, dass eine Datensitzung für die UE aktiviert werden soll; Programmcode zum Konfigurieren, basierend auf der Bestimmung, einer Datensitzungsaktivierungsanfragenachricht, so dass diese eine Anzeige einer Assoziation mit Kommunikationssitzungen eines gegebenen Typs beinhaltet; Programmcode zum Senden bzw. Übertragen der Datensitzungsaktivierungsanfragenachricht an ein Zugriffsnetzwerk; Programmcode zum Empfangen eines Pages von dem Zugriffsnetzwerk, wenn die UE nicht in einem Zustand mit dediziertem Kanal ist, der anzeigt, dass das Zugriffsnetzwerk Daten hat, die an die UE übertragen werden sollen, wobei die Daten, die an die UE übertragen werden sollen, mit einer Kommunikationssitzung des gegebenen Typs assoziiert sind; Programmcode zum Senden einer Page-Antwort an das Zugriffsnetzwerk; **gekennzeichnet durch** Programmcode zum Empfangen, ansprechend auf die Page-Antwort und basierend auf der Assoziation der Daten mit der Kommunikationssitzung des gegebenen Typs, einer Rekonfigurationsnachricht von dem Zugriffsnetzwerk, die die UE anweist, in den Zustand mit dediziertem Kanal überzugehen; und wobei die Daten, die an die UE übertragen werden, einer Anrufankündigungsnachricht zur Ankündigung der Kommunikationssitzung eines gegebenen Typs gegenüber der UE entsprechen.

## Revendications

1. Procédé d'actionnement d'un réseau d'accès agencé pour supporter des sessions de communication dans un système de communication sans fil fonctionnant conformément à un protocole de communication sans fil donné, comprenant les étapes suivantes : recevoir au niveau d'un réseau d'accès des données pour transmission vers un équipement d'utilisateur, UE, qui n'est pas dans un état de canal dédié ; déterminer que les données reçues sont associées à une session de communication d'un type donné ; déterminer qu'il faut faire passer l'UE dans un état de canal dédié sur la base de l'association des données reçues avec la session de communication du type donné ; et envoyer un message de reconfiguration à l'UE pour faire passer l'UE dans l'état de canal dédié, le procédé étant **caractérisé par** une étape où les données reçues correspondent à un message d'annonce d'appel pour annoncer la session de communication à l'UE.

2. Procédé selon la revendication 1, comprenant en outre : recevoir une indication à partir de l'UE indiquant que l'UE à terminé sa transition vers l'état de canal dédié ; et transmettre les données reçues à l'UE sur un canal de liaison descendante.

3. Procédé selon la revendication 2, dans lequel le canal de liaison descendante correspond à un canal dédié de liaison descendante, DCH, ou un canal partagé de liaison descendante à haute vitesse, HS-DSCH.

4. Procédé selon la revendication 1, comprenant en outre : téléavertir l'UE après l'étape de réception ; recevoir une réponse de téléavertissement à partir de l'UE, le message de reconfiguration étant envoyé en réponse à la réponse de téléavertissement.

5. Procédé selon la revendication 1, comprenant en outre : avant la réception des données à transmettre à l'UE, recevoir une notification d'un Support Radio, RAB, qui est associé à des sessions de communication du type donné pour l'UE.

6. Procédé selon la revendication 5, dans lequel la détermination que les données reçues sont associées à la session de communication du type donné est basée sur le fait de déterminer si un RAB associé aux données reçues correspond au RAB provenant de la notification reçue.

7. Procédé selon la revendication 1, dans lequel la détermination de faire passer l'UE dans l'état de canal dédié est réalisée indépendamment du fait que le trafic associé à l'UE soit supérieur à un seuil de trafic qui est établi pour déclencher des transitions d'UE vers l'état de canal dédié.

8. Procédé pour actionner un équipement d'utilisateur, UE, agencé pour participer à des sessions de communication dans un système de communication sans fil fonctionnant conformément à un protocole de communication sans fil donné, comprenant les étapes suivantes : déterminer qu'il faut activer une session de données pour l'UE ; configurer, sur la base de la détermination, un message de requête d'activation de session de données pour inclure une indication d'une association avec des sessions de communication d'un type donné ; transmettre le message de requête d'activation de session de données à un réseau d'accès ; recevoir un téléavertissement à partir du réseau d'accès lorsque l'UE n'est pas dans un état de canal dédié qui indique que le réseau d'accès a des données à transmettre à l'UE, les données à transmettre à l'UE étant associées à une session de communication du type de donné ; envoyer une réponse de téléavertissement au réseau d'accès ; et le procédé étant **caractérisé par** une étape consistant à recevoir, en réponse à la réponse de téléavertissement et sur la base de l'association des données avec la session de communication du type donné, un message de reconfiguration provenant du réseau d'accès qui donne instructions à l'UE de passer dans l'état de canal dédié, les données à transmettre à l'UE correspondant à un message d'annonce d'appel pour annoncer la session de communication du type donné à l'UE.

9. Procédé selon la revendication 8, comprenant en outre : achever la transition vers l'état de canal dédié au niveau de l'UE ; notifier au réseau d'accès l'achèvement de la transition ; et recevoir les données à partir du réseau d'accès sur un canal de liaison descendante en réponse à la notification.

10. Procédé selon la revendication 3 ou la revendication 9, dans lequel le canal de liaison descendante correspond à un canal dédié en liaison descendante, DCH, ou à un canal partagé de liaison descendante à haute vitesse, HS-DSCH.

11. Procédé selon la revendication 8, dans lequel la session de données correspond à un Contexte de protocole de paquets de données, PDP, le message de requête d'activation de session de données correspond à un message de Requête d'Activation de Contexte PDP et le message d'établissement reçu correspond à un message d'Etablissement de Support Radio, RAB.

12. Procédé selon la revendication 8, dans lequel l'étape de configuration comprend d'indiquer que l'UE est associé aux sessions de communication du type donné en insérant un indicateur dans un ou plusieurs champs du message de requête d'activation de session de données.

13. Réseau d'accès (120) agencé pour supporter des sessions de communication dans un système de communication sans fil (100) fonctionnant conformément à un protocole de communication sans fil donné, comprenant : des moyens pour recevoir au niveau d'un réseau d'accès (120) des données pour transmission vers un équipement d'utilisateur, UE, (200) qui n'est pas dans un état de canal dédié ;
des moyens pour déterminer que les données reçues sont associées à une session de communication d'un type donné ; des moyens pour déterminer qu'il faut faire passer l'UE (200) dans un état de canal dédié sur la base de l'association des données reçues avec la session de communication du type donné ;
des moyens pour envoyer un message de reconfiguration à l'UE (200) pour faire passer l'UE (200) dans l'état de canal dédié ; et **caractérisé en ce que** les données reçues correspondent à un message d'annonce d'appel pour annoncer la session de communication à l'UE (200).

14. Équipement d'utilisateur, UE, (200) agencé pour participer à des sessions de communication dans un système de communication sans fil (100) fonctionnant conformément à un protocole de communication sans fil donné, comprenant : des moyens pour déterminer qu'il faut activer une session de données pour l'UE (200) ; des moyens pour configurer, sur la base de la détermination, un message de requête d'activation de session de données pour inclure une indication d'une association avec des sessions de communication d'un type donné ; des moyens pour transmettre le message de requête d'activation de session de données à un réseau d'accès (120) ; des moyens pour recevoir un téléavertissement à partir du réseau d'accès (120) lorsque l'UE (200) n'est pas dans un état de canal dédié qui indique que le réseau d'accès (120) a des données à transmettre à l'UE (200), les données à transmettre à l'UE (200) étant associées à une session de communication du type donné ; des moyens pour envoyer une réponse de téléavertissement au réseau d'accès (120) ;
**caractérisé par** des moyens pour recevoir, en réponse à la réponse de téléavertissement et sur la base de l'association des données avec la session de communication du type donné, un message de reconfiguration à partir du réseau d'accès (120) qui donne instructions à l'UE (200) de passer dans l'état de canal dédié ; et les données transmises à l'UE (200) correspondant à un message d'annonce d'appel pour annoncer la session de communication du type donné à l'UE (200).

15. Support de stockage non transitoire lisible par un ordinateur contenant des instructions qui, lorsqu'elles sont exécutées par un réseau d'accès configuré pour supporter des sessions de communication dans un système de communication sans fil fonctionnant conformément à un protocole de communication sans fil donné, amènent le réseau d'accès à réaliser des opérations, les instructions comprenant : du code de programme pour recevoir au niveau d'un réseau d'accès des données pour transmission vers un équipement d'utilisateur, UE, qui n'est pas dans un état de canal dédié ; du code de programme pour déterminer que les données reçues sont associées à une session de communication d'un type donné ; du code de programme pour déterminer qu'il faut faire passer l'UE dans un état de canal dédié sur la base de l'association des données reçues avec la session de communication du type donné ; et du code de programme pour envoyer un message de reconfiguration à l'UE pour faire passer l'UE dans l'état de canal dédié, et **caractérisé en ce que** les données reçues correspondent à un message d'annonce d'appel pour annoncer la session de communication à l'UE.

16. Support de stockage non transitoire lisible par un ordinateur contenant des instructions qui, lorsqu'elles sont exécutées par un équipement d'utilisateur, UE, agencé pour participer à des sessions de communication dans un système de communication sans fil fonctionnant conformément à un protocole de communication sans fil donné, amènent l'UE à réaliser des opérations, les instructions comprenant : du code de programme pour déterminer qu'il faut activer une session de données pour l'UE ; du code de programme pour configurer, sur la base de la détermination, un message de requête d'activation de session de données pour inclure une indication d'une association avec des sessions de communication d'un type donné ; du code de programme pour transmettre le message de requête d'activation de session de données à un réseau d'accès ; du code de programme pour recevoir un téléavertissement à partir du réseau d'accès lorsque l'UE n'est pas dans un état de canal dédié qui indique que le réseau d'accès a des données à transmettre à l'UE, les données à transmettre à l'UE étant associées à une session de communication du type donné ; du code de programme pour envoyer une réponse de téléavertissement au réseau d'accès ; **caractérisé par** du code de programme pour recevoir, en réponse à la réponse de téléavertissement et sur la base de l'association des données avec la session de communication du type donné, un message de reconfiguration provenant du réseau d'accès qui donne instructions à l'UE de passer dans l'état de canal dédié ; et les données à transmettre à l'UE correspondant à un message d'annonce d'appel pour annoncer la session de communication du type donné à l'UE.
